# EUROPEAN PATENT APPLICATION

(11) **EP 4 016 273 A1**
(43) Date of publication of application: **22.06.2022**
(21) Application number: 20858466.4
(22) Date of filing: 18.08.2020
(51) Int. Cl.: G06F 3/0488

(54) **SIDE TOOLBAR DISPLAY METHOD AND DEVICE, TERMINAL, AND STORAGE MEDIUM**

(30) Priority: 29.08.2019 CN 201910820583
(71) Applicant: GUANGDONG OPPO MOBILE TELECOMMUNICATIONS CORP., LTD., Dongguan, Guangdong 523860 (CN)
(72) Inventor: SONG, Fang, Dongguan, Guangdong 523860 (CN); LU, Wanru, Dongguan, Guangdong 523860 (CN)
(74) Representative: Manitz Finsterwald Patent- und Rechtsanwaltspartnerschaft mbB
(86) International application number: PCT/CN2020/109854
(87) International publication number: WO 2021/036870

(57) **Abstract**

Embodiments of the present application relate to the field of human-computer interaction, and disclosed are a side toolbar display method and device, a terminal, and a storage medium. The method comprises: displaying a user interface in an immersive display mode; receiving a first sliding signal and a second sliding signal triggered on a touch display screen, sliding directions of the first sliding signal and the second sliding signal pointing to a screen middle area from a screen corner area, a sliding starting point of the first sliding signal being located in a first screen corner area, the second sliding signal being located in a second screen corner area, and the first screen corner area being different from the second screen corner area; and displaying a side toolbar on an upper layer of the user interface according to the first sliding signal and the second sliding signal, at least one shortcut tool control being displayed in the side toolbar. In the embodiments of the present application, the side toolbar is called out for display by means of the first sliding signal and the second sliding signal, and the method is different from callout modes of other function bars, thereby reducing the probability of misoperation.

## Description

The present application claims priority of a Chinese patent application filed on August 29, 2019, with an application No. 201910820583.5 and a title of "SIDE TOOLBAR DISPLAY METHOD AND DEVICE, TERMINAL, AND STORAGE MEDIUM"; the entire content thereof is incorporated herein by reference.

### TECHNICAL FIELD

Embodiments of the present application relates to the field of human-computer interaction, and in particular, to a side-toolbar-display method, a device, a terminal, and a storage medium.

### BACKGROUND

A terminal generally provides a status bar, a navigation bar, and a side toolbar. Among them, the status bar displays an operator name, a signal strength, battery power, clock information, etc.; the navigation bar displays a return button, a menu button, a home button, etc.; and the side toolbar displays shortcut control switches, shortcut start applications, brightness and volume adjustment controls, etc. At the same time, the terminal can provide corresponding outgoing operations for each kind of function bar.

When a user is playing a game or watching a video, it usually needs to call out a side toolbar to perform some shortcut operations, such as taking screenshots, switching networks, etc. At this time, the user can slide inwards from any one of four top corners of a touch screen to call out the side toolbar; because a status bar can be called out by sliding downwards from the top of the touch screen, and it is difficult to distinguish sliding inwards from sliding downwards, if the user needs to call out the side toolbar, it may cause accidental touch operations and call out the status bar.

### SUMMARY OF THE DISCLOSURE

Embodiments of the present application provides a side-toolbar-display method, a device, a terminal, and a storage medium. The technical solutions are as follows.

In one aspect, an embodiment of the present application provides a side-toolbar-display method, the method comprises: displaying a user interface in an immersive display mode; receiving a first sliding signal and a second sliding signal triggered on a touch display screen, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area; and displaying a side toolbar on an upper layer of the user interface according to the first sliding signal and the second sliding signal, wherein at least one shortcut tool control is displayed in the side toolbar.

In another aspect, an embodiment of the present application provides a side-toolbar-display device, the device comprises: a first display module configured to display a user interface in an immersive display mode; a first receiving module configured to receive a first sliding signal and a second sliding signal triggered on a touch display screen, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area; and a second display module configured to display a side toolbar on an upper layer of the user interface according to the first sliding signal and the second sliding signal, wherein at least one shortcut tool control is displayed in the side toolbar.

In another aspect, an embodiment of the present application provides a terminal, the terminal comprises a processor and a memory; the memory stores at least one instruction, and the at least one instruction is configured to be executed by the processor to implement the side-toolbar-display method according to the above aspect.

In another aspect, a computer-readable storage medium is provided; the storage medium stores at least one instruction, and the at least one instruction is configured to be executed by a processor to implement the side-toolbar-display method according to the above aspect.

In another aspect, a computer program product is further provided; the computer program product stores at least one instruction, and the at least one instruction is loaded and executed by a processor to implement the side-toolbar-display method according to the above aspect.

### BRIEF DESCRIPTION OF THE DRAWINGS

FIG. 1 shows a schematic view of a displaying manner of a status bar and a side toolbar in the related art.
FIG. 2 is a schematic view of a side-toolbar-display process provided by an exemplary embodiment of the present application.
FIG. 3 is a flow chart of a side-toolbar-display method shown by an exemplary embodiment of the present application.
FIG. 4 is a schematic view of generating areas of a first sliding signal and a second sliding signal shown by an exemplary embodiment of the present application.
FIG. 5 is a display interface view of a side toolbar shown by an exemplary embodiment of the present application.
FIG. 6 is a flow chart of a side-toolbar-display method shown by another exemplary embodiment of the present application.
FIG. 7 is a flow chart of a side-toolbar-display method shown by another exemplary embodiment of the present application.
FIG. 8 is a schematic view of side-toolbar-display conditions in different display statuses shown by another exemplary embodiment of the present application.
FIG. 9 is a schematic view of a target display area corresponding to different display statuses.
FIG. 10 is a schematic view of display areas of a shortcut tool control and terminal status information in a side toolbar in different display statuses.
FIG. 11 is a schematic view of a process of displaying a second-class tool menu in a horizontal screen display status.
FIG. 12 is a schematic view of a process of displaying editing a menu in a horizontal screen display status.
FIG. 13 is a schematic view of a process of exchanging positions of shortcut tool controls in a horizontal screen display status.
FIG. 14 is a schematic view of a relationship between using frequencies and display positions of shortcut tools.
FIG. 15 shows a structural block diagram of a side-toolbar-display device provided by an exemplary embodiment of the present application.
FIG. 16 shows a structural block diagram of a terminal provided by an exemplary embodiment of the present application.

### DETAILED DESCRIPTION

In order to make purposes, technical solutions, and advantages of the present application be clearer, embodiments of the present application will be further described in detail below with reference to the accompanying drawings.

"Plurality" mentioned herein means two or more. "And/or" describes association relationships between associated objects and indicates that there can be three types of relationships, for example, A and/or B can mean three situations that: A exists alone, A and B exist at the same time, and B exists alone. The character "/" generally indicates that the associated objects before and after are in an "or" relationship.

When a terminal displays a user interface, it usually displays a status bar, a navigation bar, and a side toolbar on an upper layer of the user interface. Among them, the status bar displays an operator name, signal strength, battery power, clock information, etc.; the navigation bar displays a return button, a menu button, and a home button, etc.; and the side toolbar displays a shortcut control switch, shortcut start applications, brightness and volume adjustment controls, etc. At the same time, the terminal will provide a corresponding display mode for each function bar.

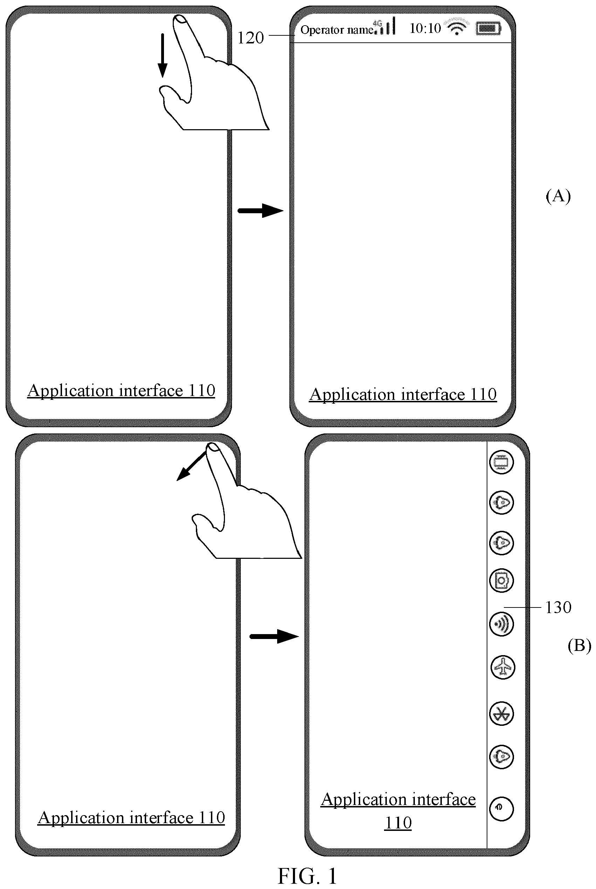

On different user interfaces, display modes and display positions of different function bars are different. Schematically, as shown in FIG. 1, on an application interface 110, none of a status bar, a navigation bar, and a side toolbar is displayed, and a user needs to use different sliding gestures to call out the status bar, the navigation bar, and the side toolbar. As shown in (A) in FIG. 1, it is possible to touch a top of a display screen and slide down to call out a status bar 120; and as shown in (B) in FIG. 1, it is possible to touch an upper right corner of the display screen and slide inward to call out a side toolbar 130. However, in actual situations, a user may be unable to accurately make gestures of sliding inward and sliding downward, which makes it be impossible to accurately call out target function bars, such that misoperation problems occur.

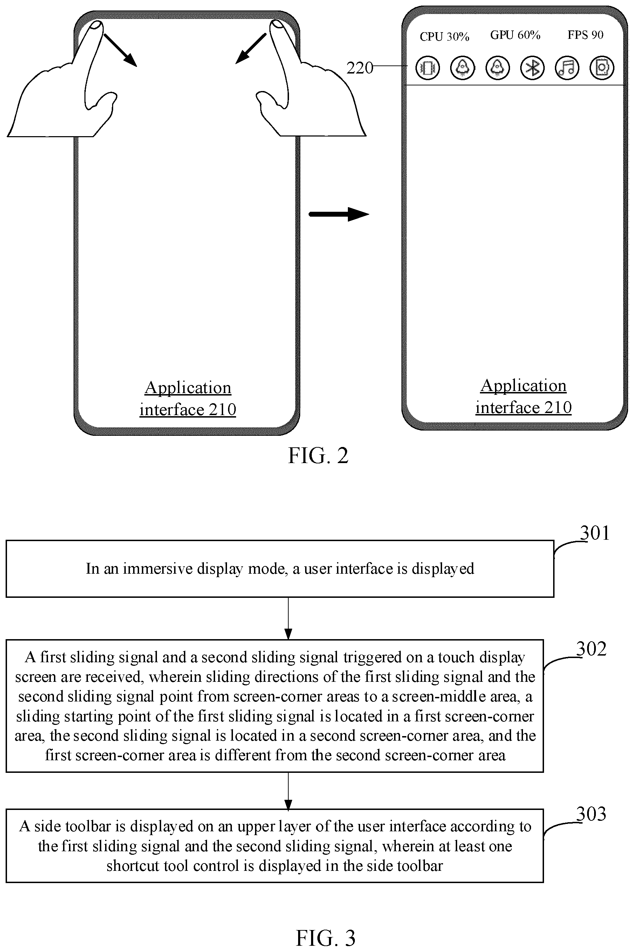

In order to solve the problem of misoperation, in embodiments of the present application, a sliding gesture of calling out a side toolbar is adjusted so that it can be clearly distinguished from sliding gestures of other function bars. Illustratively, as shown in FIG. 2, on an application interface 210, a side toolbar 220 can be called out by sliding inward on two corner areas at a top of a touch display screen. Using a first sliding signal and a second sliding signal to call out and display a side toolbar can be distinguished from call-out methods of other function bars, such as a sliding call-out method of a status bar, thereby reducing probability of misoperation and then improving accuracy of touch operations.

Referring to FIG. 3, which shows a flow chart of a side-toolbar-display method shown by an exemplary embodiment of the present application. This embodiment of the present application takes the method applied to a terminal with a touch display screen as an example for description. The method includes the follows.

Operation 301, in an immersive display mode, a user interface is displayed.

Among them, the immersive display mode refers to a full-screen display mode for application program interfaces, in this display mode, none of a status bar, a navigation bar, and a side toolbar is displayed. For example, applications such as games and watching videos are displayed in a full screen. Among them, the user interface may be an interface on which a current application program is running. In a possible implementation manner, when the terminal is in the application full-screen display mode, the interface on which the current application program is running is displayed.

Optionally, when the terminal is in a non-immersive display mode, that is, a user interface displays a status bar, the user interface can be a main interface of the terminal, that is, an interface that displays various application controls, and can also be an application program interface displaying the status bar. In a possible implementation manner, in the non-immersive display mode, the side-toolbar-display method shown in each embodiment of the present application may also be adopted.

Operation 302, a first sliding signal and a second sliding signal triggered on a touch display screen are received, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area.

In a possible implementation manner, on the current user interface, when a user needs to call out a side toolbar, it is possible to respectively slide from the first screen-corner area and the second screen-corner area to the screen-middle area. At this time, the terminal receives the first sliding signal and the second sliding signal triggered on the touch display screen, wherein the first sliding signal is a signal generated by sliding from the first screen-corner area to the screen-middle area, and the second sliding signal is a signal generated by sliding from the second screen-corner area to the screen-middle area.

Optionally, the first screen-corner area and the second screen-corner area can be two corner areas at any side of the touch display screen.

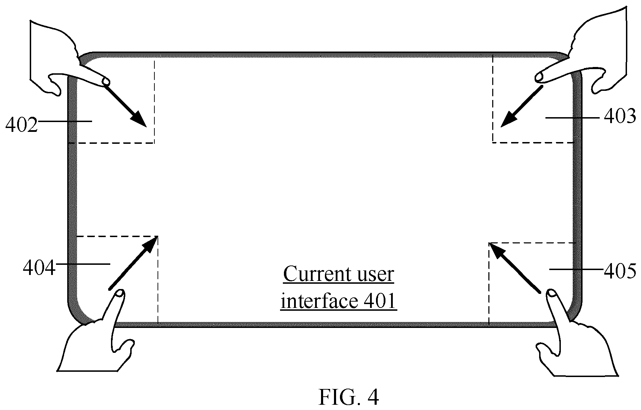

Exemplarily, as shown in FIG. 4, on a current user interface 401, a user can respectively slide along directions shown by arrows from an upper left corner area 402 and an upper right corner area 403, and can also respectively slide along directions shown by arrows from a lower left corner area 404 and a lower right corner area 405, and can also respectively slide along directions shown by arrows from the upper left corner area 402 and the lower left corner area 404, and can also respectively slide along directions shown by arrows from the upper right corner area 403 and the lower right corner area 405.

Operation 303, a side toolbar is displayed on an upper layer of the user interface according to the first sliding signal and the second sliding signal, wherein at least one shortcut tool control is displayed in the side toolbar.

Among them, the shortcut tool control can be a shortcut manipulation switch, such as Bluetooth, mobile network, etc., and can also be a shortcut start application, such as games, music, camera, etc., and can also be a brightness and volume adjustment control. Embodiments of the present application do not limit the specific type of the shortcut tool control.

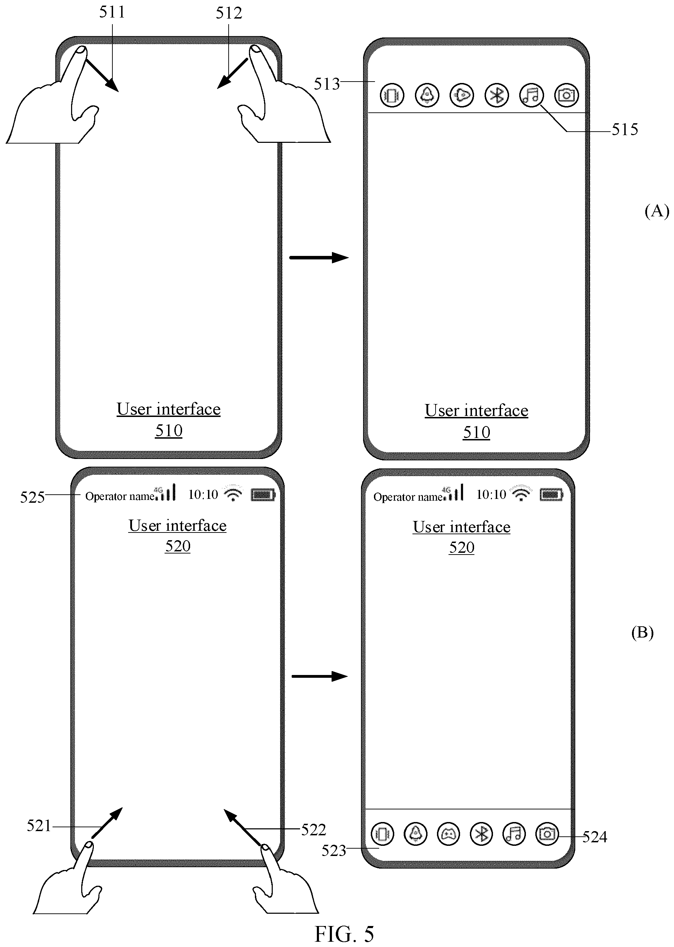

In the immersive display mode, exemplarily, as shown in (A) of FIG. 5, on a user interface 510, when a first sliding signal 511 and a second sliding signal 512 are received, a side toolbar 513 is unfolded downward from a top of a touch display screen and displayed, wherein the side toolbar 513 displays a plurality of shortcut tool controls 515.

Optionally, in some non-immersive display modes, that is, when the user interface displays the status bar, at this time, when the terminal receives the first sliding signal and the second sliding signal triggered on the touch display screen, it is also possible to display the side toolbar on the upper layer of the user interface according to the first sliding signal and the second sliding signal, the side toolbar includes at least one shortcut tool control.

Exemplarily, as shown in (B) of FIG. 5, a status bar 525 is displayed on a user interface 520; when the first sliding signal 511 and the second sliding signal 512 are received, a side toolbar 523 is unfolded upward from a bottom of the touch display screen and displayed, wherein the side toolbar 523 displays a plurality of shortcut tool controls 524.

In conclusion, in this embodiment of the present application, when the terminal displays a user interface in an immersive display mode, if a first sliding signal and a second sliding signal triggered on the touch display screen are received and the first sliding signal and the second sliding signal point to a screen-middle area from different screen-corner areas, a side toolbar is displayed on an upper layer of the user interface according to the first sliding signal and the second sliding signal. The side toolbar is called out for display by the first sliding signal and the second sliding signal, this can differ from callout methods of other function bars, such as a callout method of sliding downward for a status bar, such that probability of misoperation is reduced and thus accuracy of touch operations is improved.

Optionally, the displaying a side toolbar on an upper layer of the user interface according to the first sliding signal and the second sliding signal includes: acquiring a current display state, wherein the current display state includes a landscape display state and a portrait display state; if the first screen-corner area and the second screen-corner area meet a side-toolbar-display condition corresponding to the current display state, determining a target display area of the side toolbar according to the first sliding signal and the second sliding signal; and displaying the side toolbar on the upper layer of the user interface according to the target display area.

Optionally, after the acquiring a current display state, the method further includes: if the current display state is a landscape display state, and the first screen-corner area and the second screen-corner area are corner areas corresponding to the same longer side of a screen, determining that the first screen-corner area and the second screen-corner area meet the side-toolbar-display condition corresponding to the current display state; and if the current display state is a portrait display state, and the first screen-corner area and the second screen-corner area are corner areas corresponding to the same shorter side of a screen, determining that the first screen-corner area and the second screen-corner area meet the side-toolbar-display condition corresponding to the current display state.

Optionally, the determining a target display area of the side toolbar according to the first sliding signal and the second sliding signal includes: determining a target screen edge corresponding to the first screen-corner area and the second screen-corner area; and determining a display area at a side of the target screen edge as a target display area.

Optionally, the side toolbar further includes terminal status information; in the landscape display state, the side toolbar includes a first display area, a second display area, and a third display area, the first display area and the third display area are configured to display shortcut tool controls, the second display area is configured to display the terminal status information, and the second display area is located between the first display area and the third display area; and in the portrait display state, the side toolbar includes a fourth display area and a fifth display area, the fourth display area is configured to display shortcut tool controls, and the fifth display area is configured to display the terminal status information.

Optionally, the side tool bar displays a first-level tool menu; and after the displaying a side toolbar on an upper layer of the user interface according to the first sliding signal and the second sliding signal, the method further includes: receiving a third sliding signal for the side toolbar; and displaying a second-level tool menu in the side toolbar according to the third sliding signal, wherein a quantity of shortcut tool controls included in the second-level tool menu is larger than a quantity of shortcut tool controls included in the first-level tool menu.

Optionally, after the displaying a side toolbar on an upper layer of the user interface according to the first sliding signal and the second sliding signal, the method further includes: receiving an editing operation for a shortcut tool control in the side toolbar; entering an editing mode according to the editing operation, wherein in the editing mode, the side toolbar displays an editing menu, and the editing menu includes at least one candidate shortcut tool control; when receiving a dragging operation for the candidate shortcut tool control, exchanging positions of the candidate shortcut tool control and a target shortcut tool control according to the dragging operation, wherein the target shortcut tool control is a shortcut tool control corresponding to a dragging terminal point of the dragging operation.

Optionally, the method further includes: acquiring a use frequency of each shortcut tool control in the side toolbar when running different applications; and determining a display position of each shortcut tool control in the side toolbar according to a current application and a use frequency of each shortcut tool control in the current application, wherein convenience of one-handed operation of the display position is positively correlated with the use frequency.

Since in different display states, the first sliding signal and the second sliding signal triggering to display the side toolbar may be different, when the terminal receives the first sliding signal and the second sliding signal, it needs to determine whether it is required to callout the side toolbar in combination with the current display state.

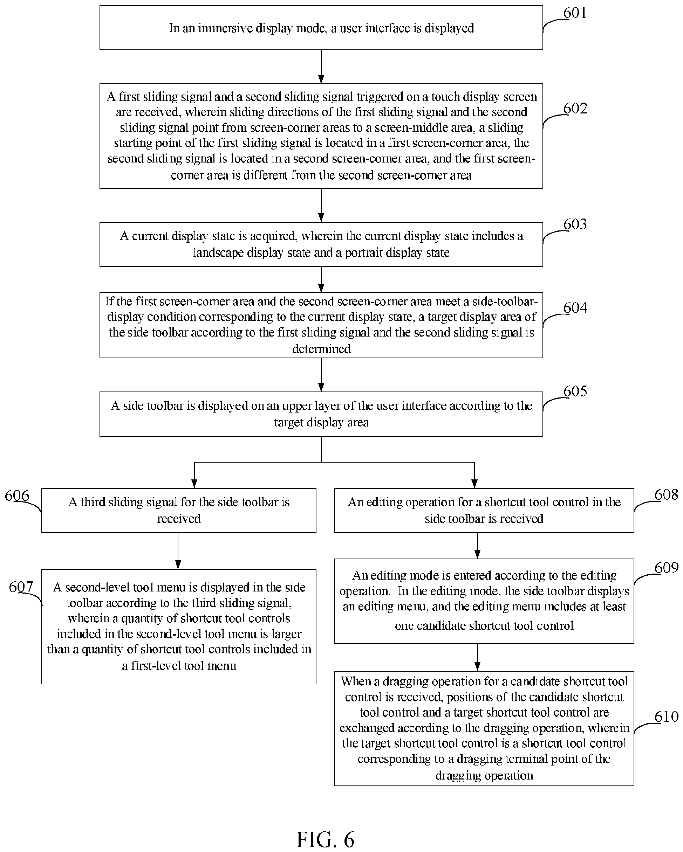

Referring to FIG. 6, which shows a flow chart of a side-toolbar-display method shown by another exemplarily embodiment of the present application. The method includes the follows.

Operation 601, in an immersive display mode, a user interface is displayed.

Operation 602, a first sliding signal and a second sliding signal triggered on a touch display screen are received, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area.

Implementation manners of the above operations 610 and 602 can refer to the operations 301 and 302, this embodiment does not repeat here.

Operation 603, a current display state is acquired, wherein the current display state includes a landscape display state and a portrait display state.

Among them, in the landscape display state, image content on the user interface is displayed laterally; in the portrait display state, image content on the user interface is displayed longitudinally.

Operation 604, if the first screen-corner area and the second screen-corner area meet a side-toolbar-display condition corresponding to the current display state, a target display area of the side toolbar according to the first sliding signal and the second sliding signal is determined.

In a possible implementation manner, if the current display state is the landscape display state, the side-toolbar-display condition can be that: the first screen-corner area and the second screen-corner area are corner areas corresponding to the same longer side of a screen; if the current display state is the portrait display state, the side-toolbar-display condition can be that: the first screen-corner area and the second screen-corner area are corner areas corresponding to the same shorter side of a screen. Among them, the side-toolbar-display condition can be system default setting, or users' customize setting.

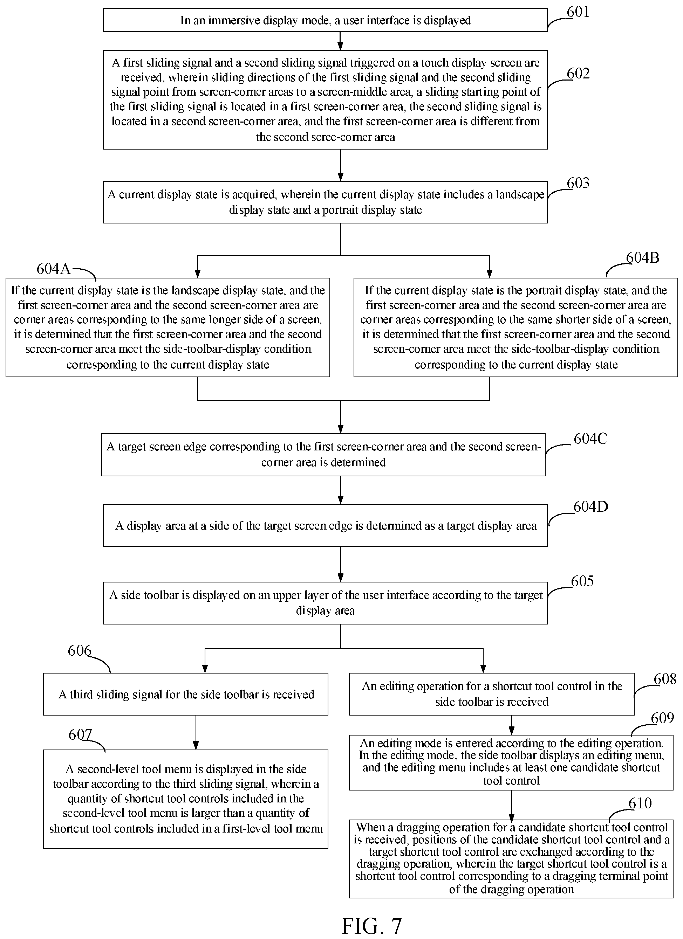

Optionally, on the basis of FIG. 6, as shown in FIG. 7, the operation 604 can include operations 604A, 604B, 604C, and 604D.

Operation 604A, if the current display state is the landscape display state, and the first screen-corner area and the second screen-corner area are corner areas corresponding to the same longer side of a screen, it is determined that the first screen-corner area and the second screen-corner area meet the side-toolbar-display condition corresponding to the current display state.

In a possible implementation manner, when the terminal determines that the current display state is the landscape display state, and detects that the first screen-corner area on which the first sliding signal acts and the second screen-corner area on which the second sliding signal acts are corner areas corresponding to the same longer side of a screen, it is determined that the screen-corner areas on which sliding signals are currently generated meet the side-toolbar-display condition corresponding to the landscape display state.

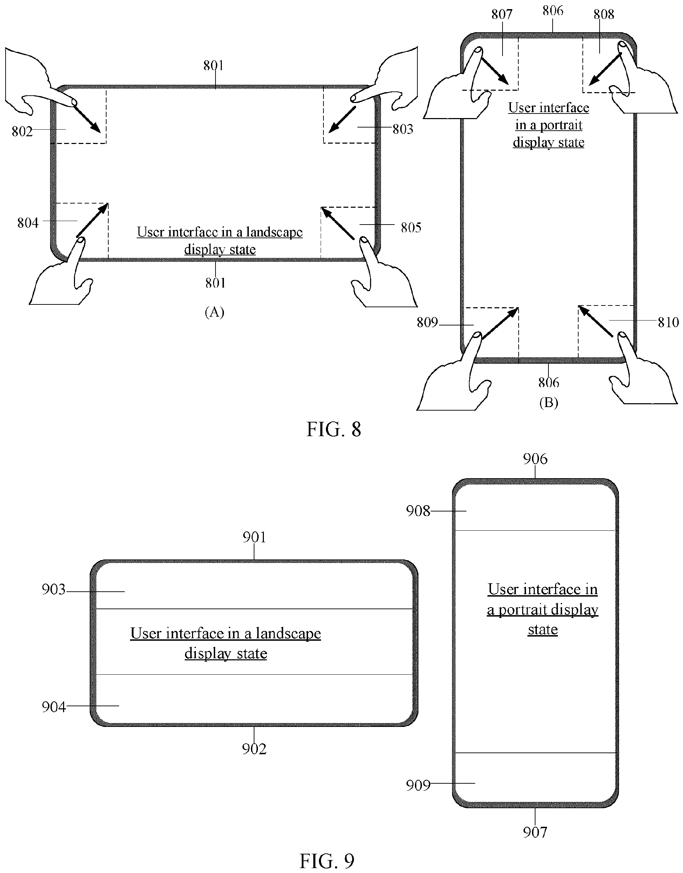

Exemplarily, as shown in (A) of FIG. 8, the current display state is the landscape display state, and it is possible to slide inward from corner areas corresponding to the longer side 801 of the touch display screen, that is, slide inward from the upper left corner area 802 and the upper right corner area 803, or slide inwards from the lower left corner area 804 and the lower right corner area 805; when the terminal receives the above sliding signals, it is determined that the first screen-corner area and the second screen-corner area meet the side-toolbar-display condition corresponding to the current display state.

Optionally, if the current display state is the landscape display state, and the first screen-corner area and the second screen-corner area are corner areas corresponding to the same shorter side of a screen, it is determined that the first screen-corner area and the second screen-corner area do not meet the side-toolbar-display condition corresponding to the current display state.

Exemplarily, as shown in (A) of FIG. 8, in the landscape display state, when the terminal receives sliding signals of the upper left corner area 802 and of the lower left corner area 804, or the terminal receives sliding signals of the upper right corner area 803 and of the lower right corner area 805, it is determined that the first screen-corner area and the second screen-corner area do not meet the side-toolbar-display condition corresponding to the current display state.

Optionally, if the current display state is the landscape display state, and the first screen-corner area and the second screen-corner area are corner areas corresponding to different longer sides of a screen, it is determined that the first screen-corner area and the second screen-corner area do not meet the side-toolbar-display condition corresponding to the current display state.

Exemplarily, as shown in (A) of FIG. 8, in the landscape display state, when the terminal receives sliding signals of the upper left corner area 802 and of the lower right corner area 805, or the terminal receives sliding signals of the upper right corner area 803 and of the lower left corner area 804, it is determined that the first screen-corner area and the second screen-corner area do not meet the side-toolbar-display condition corresponding to the current display state.

Operation 604B, if the current display state is the portrait display state, and the first screen-corner area and the second screen-corner area are corner areas corresponding to the same shorter side of a screen, it is determined that the first screen-corner area and the second screen-corner area meet the side-toolbar-display condition corresponding to the current display state.

In a possible implementation manner, when the terminal determines that the current display state is the portrait display state, and respectively detects the first screen-corner area and the second screen-corner area at two sides of the same shorter side of a touch display screen, that is, the first screen-corner area generating the first sliding signal and the second screen-corner area generating the second sliding signal are the same shorter side of the touch display screen, it is determined that the first screen-corner area and the second screen-corner area meet the side-toolbar-display condition in the portrait display state.

Exemplarily, as shown in (B) of FIG. 8, the current display state is the portrait display state, and it is possible to slide inward from corner areas corresponding to the shorter side 806 of the touch display screen, that is, slide inward from the upper left corner area 807 and the upper right corner area 808, or slide inwards from the lower left corner area 809 and the lower right corner area 810; when the terminal receives the above sliding signals, it is determined that the first screen-corner area and the second screen-corner area meet the side-toolbar-display condition corresponding to the current display state.

Optionally, if the current display state is the landscape display state, and the first screen-corner area and the second screen-corner area are corner areas corresponding to the same longer side of a screen, it is determined that the first screen-corner area and the second screen-corner area do not meet the side-toolbar-display condition corresponding to the current display state.

Exemplarily, as shown in (A) of FIG. 8, in the portrait display state, when the terminal receives sliding signals of the upper left corner area 807 and of the lower left corner area 809, or the terminal receives sliding signals of the upper right corner area 808 and of the lower right corner area 810, it is determined that the first screen-corner area and the second screen-corner area do not meet the side-toolbar-display condition corresponding to the current display state.

Optionally, if the current display state is the portrait display state, and the first screen-corner area and the second screen-corner area are corner areas corresponding to different shorter sides of a screen, it is determined that the first screen-corner area and the second screen-corner area do not meet the side-toolbar-display condition corresponding to the current display state.

Exemplarily, as shown in (B) of FIG. 8, in the portrait display state, when the terminal receives sliding signals of the upper left corner area 807 and of the lower right corner area 810, or the terminal receives sliding signals of the upper right corner area 808 and of the lower left corner area 809, it is determined that the first screen-corner area and the second screen-corner area do not meet the side-toolbar-display condition corresponding to the current display state.

Operation 604C, a target screen edge corresponding to the first screen-corner area and the second screen-corner area is determined.

In a possible implementation manner, when the terminal is in the landscape display state and receives sliding signals of the first screen-corner area and the second screen-corner area meeting the current display state, a longer side corresponding to the first screen-corner area and the second screen-corner area is determined as a target screen edge; when the terminal is in the portrait display state and receives sliding signals of the first screen-corner area and the second screen-corner area meeting the current display state, a shorter side corresponding to the first screen-corner area and the second screen-corner area is determined as a target screen edge.

Operation 604D, a display area at a side of the target screen edge is determined as a target display area.

In order to make a display area of the side toolbar conforms to an operation habit of a user, in a possible implementation manner, it is possible to determine a target display area based on a target screen edge of a touch display screen operated by the user, that is, a display area being adjacent to a longer side or a shorter side corresponding to the first screen-corner area (generating the first sliding signal) and the second screen-corner area (generating the second sliding signal) is used as a target display area displaying the side toolbar.

Exemplarily, as shown in FIG. 9, in the landscape display state, if the terminal determines that the target screen edge is a screen longer side 901, a display area 903 at a side of the screen longer side 901 is determined as the target display area; if the terminal determines that the target screen edge is a screen longer side 902, a display area 904 at a side of the screen longer side 902 is determined as the target display area. In the portrait display state, if the terminal determines that the target screen edge is a screen shorter side 906, a display area 908 at a side of the screen shorter side 906 is determined as the target display area; if the terminal determines that the target screen edge is a screen shorter side 907, a display area 909 at a side of the screen shorter side 907 is determined as the target display area.

Operation 605, a side toolbar is displayed on an upper layer of the user interface according to the target display area.

In a possible implementation manner, the terminal displays a side toolbar on an upper layer of the user interface according to the determined target display area, wherein the side toolbar, besides displaying at least one shortcut tool control, can further include terminal status information. The terminal status information may include a use situation of a current central processing unit (CPU) of the termina, an operating situation of a graphics processing unit (GPU), a network speed, network delay, a frame rate (Frame Per Second, FPS), etc.

In this embodiment, in the same display state, the side toolbar can be displayed on an upper part of the same screen, and can also be displayed on a lower part of the screen. Users can callout the side toolbar through corresponding sliding gestures according to operation habits.

In order to improve operation convenience of users, it is possible to perform area division for the side toolbar in different display states, so as to display shortcut tool controls in areas which is convenient for users to operate, and display terminal status information not relating to operations in a touch control dead zone of users.

Optionally, in the landscape display state, the side toolbar includes a first display area, a second display area, and a third display area; wherein the first display area and the third display area are configured to display shortcut tool controls, the second display area is configured to display the terminal status information, and the second display area is located between the first display area and the third display area. By distributing the shortcut tool controls in two end areas of the side toolbar, it is convenient for users to perform touch control operations in areas that are easy to operate, and at the same time, the terminal status information can be known in a clicking dead zone.

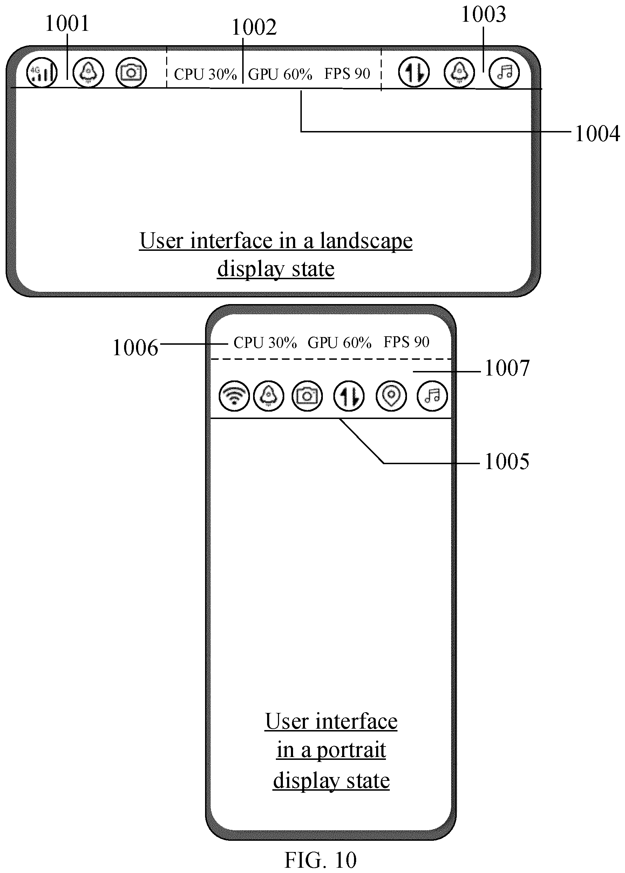

Exemplarily, as shown in FIG. 10, in the landscape display state, a side toolbar 1004 is displayed on an upper layer of a user interface, the side toolbar 1004 includes a first display area 1001, a second display area 1002, and a third display area 1003; wherein the second display area 1002 displays terminal status information, and the first display area 1001 and the third display area 1003 display shortcut tool controls.

Optionally, in the portrait display state, the side toolbar includes a fourth display area and a fifth display area, wherein the fourth display area is configured to display shortcut tool controls, and the fifth display area is configured to display the terminal status information. Considering that a display area in the portrait display state is narrower, therefore the terminal status information and the shortcut tool controls are divided into two areas to display, so that more shortcut operations can be performed in a called out side toolbar, and at the same time, more terminal status information can be known.

Exemplarily, as shown in FIG. 10, in the portrait display state, a side toolbar 1005 is displayed on an upper layer of a user interface, the side toolbar 1005 includes a fourth display area 1006 and a fifth display area 1007, wherein the fourth display area 1006 displays terminal status information, and the fifth display area 1007 displays shortcut tool controls.

In a possible implementation manner, the terminal displays a side toolbar on an upper layer of the user interface according to the first sliding signal and the second sliding signal, at this time, a first-level tool menu in the side toolbar is displayed. If terminal status information and shortcut tool controls displayed in the first-level tool menu cannot meet an operation requirement of a user, at this time, the user can adopt a corresponding callout gesture to call out a second-level tool menu and thus perform more shortcut operations. Among them, a method for calling out and displaying the second-level tool menu in the side toolbar can include an operation 606 and an operation 607.

In a possible implementation manner, when a user needs to modify a display position of a shortcut tool in the side toolbar or modify a display position of terminal status information, at this time, the user can adopt a corresponding editing operation to make the side toolbar enter an editing mode. Among them, a process that the side toolbar enters the editing mode can includes an operation 608, and operation 609, and an operation 610.

Operation 606, a third sliding signal for the side toolbar is received.

Among them, a generating area of the third sliding signal can be any position in the side toolbar, and a sliding direction of the third sliding signal can be determined according to a display area of the side toolbar. Schematically, a relationship between the display area of the side toolbar and the sliding direction of the third sliding signal is as shown in Table 1.

**Table 1**

| Display area | Sliding direction |
|---|---|
| In the landscape display state, in an upper area of the touch display screen | Sliding downward from the side toolbar area |
| In the landscape display state, in a lower area of the touch display screen | Sliding upward from the side toolbar area |
| In the portrait display state, in an upper area of the touch display screen | Sliding downward from the side toolbar area |
| In the portrait display state, in a lower area of the touch display screen | Sliding upward from the side toolbar area |

Schematically, in the landscape display state, when the display area of the side toolbar is the upper area of the touch display screen, the sliding direction of the third sliding signal is determined by Table 1: the third sliding signal should slide downward from the side toolbar area.

Operation 607, a second-level tool menu is displayed in the side toolbar according to the third sliding signal, wherein a quantity of shortcut tool controls included in the second-level tool menu is larger than a quantity of shortcut tool controls included in the first-level tool menu.

In a possible implementation manner, according to a third sliding direction, the terminal can display the second-level tool menu under (when the third sliding direction is sliding downward) or above (when the third sliding direction is sliding upward) the side toolbar.

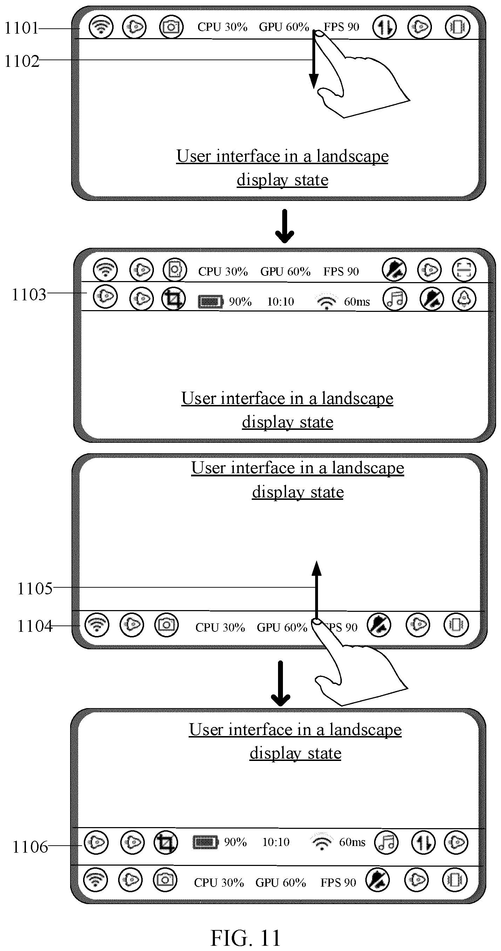

Schematically, as shown in FIG. 11, in the landscape display state, when the terminal receives a third sliding signal 1102 triggered on a side toolbar 1101, a second-level tool menu 1103 is unfolded downward from the side toolbar 1101 and displayed. When the terminal receives a third sliding signal 1105 triggered on a side toolbar 1104, a second-level tool menu 1106 is unfolded upward from the side toolbar 1104 and displayed. A method for displaying a second-level tool menu in the portrait display state is similar to that in the landscape display state, and this embodiment does not repeat here.

In a possible implementation manner, the side toolbar can include a first-level tool menu, a second-level tool menu, a third level tool menu, an Nth level tool menu, etc. Users can adopt calling out gestures similar to that of the second-level tool menu to call the third level tool menu, the Nth level tool menu, etc., and this embodiment does not limit here.

Optionally, a user can adopt a sliding direction being inverse to that of calling out the second-level tool menu to fold the side toolbar.

Operation 608, an editing operation for a shortcut tool control in the side toolbar is received.

Among them, the editing operation is different from clicking operations when using shortcut tool controls. The editing operation can be a long-press operation or a pressing operation on a shortcut tool control. Optionally, when the side toolbar displays terminal status information, the editing operation can also be a long-press operation or a pressing operation for the terminal status information.

Operation 609, an editing mode is entered according to the editing operation. In the editing mode, the side toolbar displays an editing menu, and the editing menu includes at least one candidate shortcut tool control.

In a possible implementation manner, when a user long-presses any terminal status information or shortcut tool control, the terminal receives an editing operation for a side tool bar, that is, enter an editing mode; the side toolbar in the editing mode provides a plurality of candidate shortcut tool controls for the user to select.

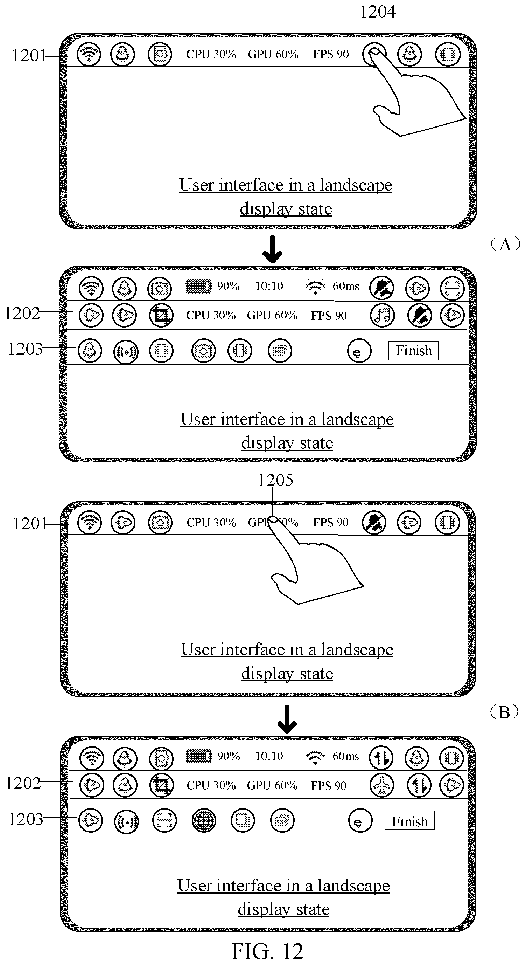

Taking the landscape display state as an example, as shown in (A) of FIG. 12, when a side toolbar displays a first-level tool menu 1201, a user's finger long-presses a shortcut tool control 1204; at this time, the terminal receives this editing operation, and a second-level tool menu 1202 and an editing menu 1203 are unfolded downward from the side toolbar and displayed. Optionally, as shown in (B) of FIG. 12, when the side toolbar displays the first-level tool menu 1201, a user's finger long-presses a terminal status information icon 1205; at this time, the terminal receives this editing operation, and the second-level tool menu 1202 and the editing menu 1203 are unfolded downward from the side toolbar and displayed.

In a possible implementation manner, a user can perform an editing operation when the side toolbar displays the first-level tool menu, and can also perform an editing operation when the side toolbar displays the second-level tool menu.

Operation 610, when a dragging operation for a candidate shortcut tool control is received, positions of the candidate shortcut tool control and a target shortcut tool control are exchanged according to the dragging operation, wherein the target shortcut tool control is a shortcut tool control corresponding to a dragging terminal point of the dragging operation.

When the side toolbar is in the editing mode, a user can exchange a candidate shortcut tool control with a target shortcut tool control, wherein the candidate shortcut tool control can be a shortcut tool control displayed in an editing menu, the target shortcut tool control can be a shortcut tool control displayed in a first-level tool menu, and can also be a shortcut tool control displayed in a second-level tool menu. Optionally, a user can also exchange shortcut tool controls displayed in a first-level tool menu and in a second-level tool menu, or a user can also exchange terminal status information displayed in a first-level tool menu and in a second-level tool menu.

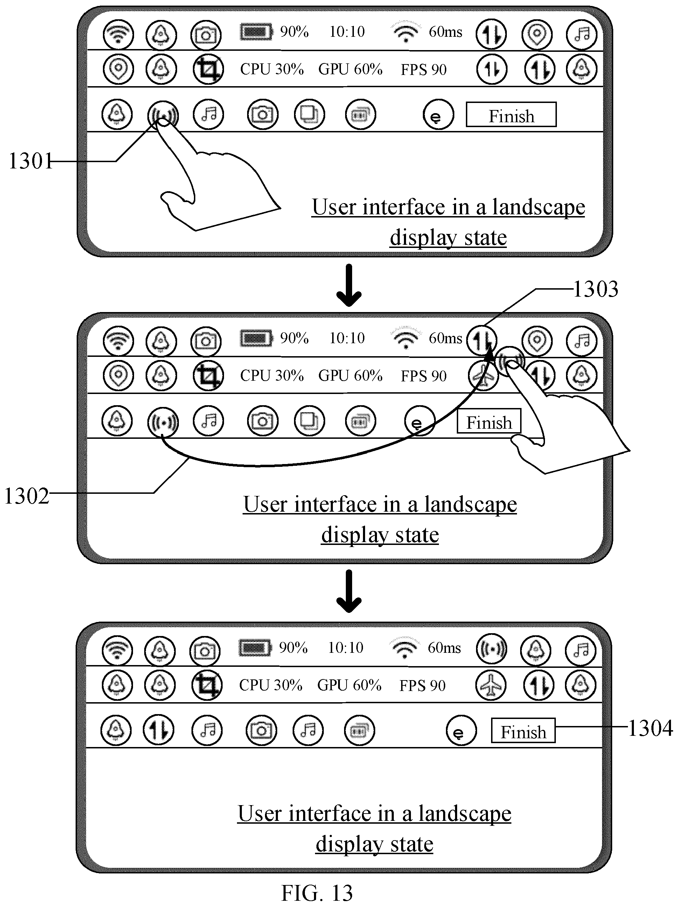

Schematically, as shown in FIG. 13, a user's finger long-presses a candidate shortcut tool control 1301, drags it along a direction shown by the arrow 1302 to a position of a target shortcut tool control 1303, and stops long-pressing the shortcut tool control 1301, so that position exchange is finished between the shortcut tool control 1301 and the shortcut tool control 1303. After editing is finished, it is possible to click a finishing key 1304 to store editing result and exit from the editing mode.

In this embodiment, by adopting corresponding side-toolbar-display conditions for different display states, a side toolbar meeting a current display state can be called out more accurately, and area division is performed aiming at different side toolbars, such that shortcut tool controls are displayed in areas which are convenient for users to operate, and terminal status information not relating to operation is displayed in a users' touch control dead zone, thereby improving use efficiency for shortcut tool controls of users in different application scenes. Moreover, by performing a corresponding sliding operation on a called out first-level tool menu, a second-level tool menu can be called out, such that users can perform more shortcut operations. In addition, in this embodiment, by an editing operation of long-pressing a shortcut tool control, an editing menu can be called out; in an editing mode, a user can self-define display positions of shortcut tool controls and of terminal status information in a side toolbar, thereby improving use efficiency for shortcut tool controls of users in different application scenes.

In a possible implementation manner, shortcut tool controls used in different applications by a user are different, or use frequencies of various shortcut tool controls in the same application are different, therefore it is required to determine display positions of various shortcut tool controls according to applications.

Optionally, a terminal can determine display positions of shortcut tool controls in a side toolbar through the following operations.

1. When running different applications, a use frequency of each shortcut tool control in the side toolbar is acquired.

In a possible implementation manner, the terminal automatically acquires a use frequency of each shortcut tool control in the side toolbar when running different applications. For example, when running an application A, use frequencies of shortcut tool controls in the side toolbar, from high to low, are sequentially: shortcut tool control A> shortcut tool control B> shortcut tool control C>shortcut tool control D.

2. A display position of each shortcut tool control in the side toolbar is determined according to a current application and a use frequency of each shortcut tool control in the current application, wherein convenience of one-handed operation of the display position is positively correlated with the use frequency.

In a possible implementation manner, the terminal determines a display position of each shortcut tool control in the side toolbar according to a current application and a use frequency of each shortcut tool control in the current application, wherein convenience of one-handed operation of the display position is positively correlated with the use frequency, that is, shortcut tool controls with higher use frequencies should be displayed in area ranges being more convenient for one-handed operations, and shortcut tool controls with higher use frequencies are displayed in a first-level tool menu in prior.

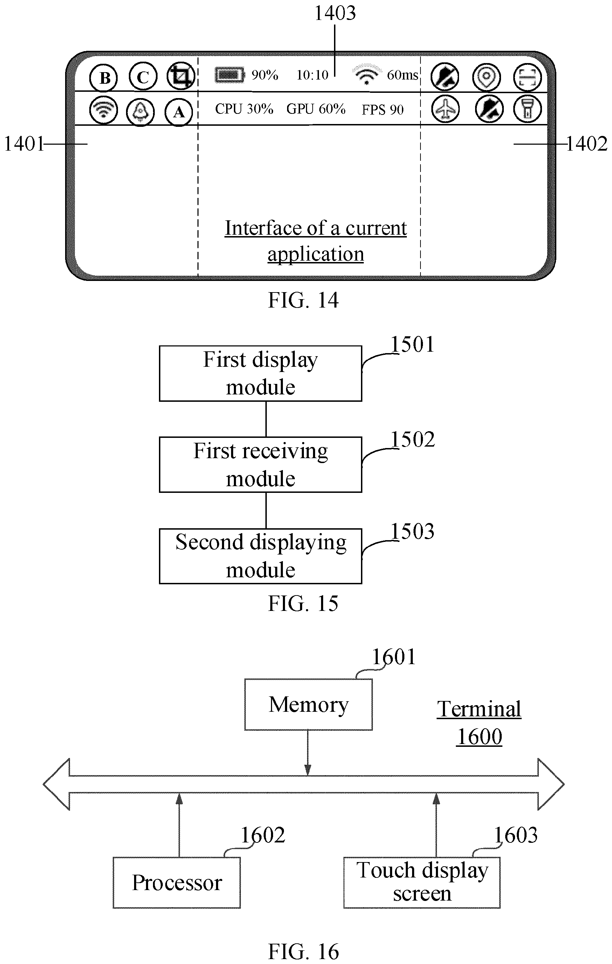

Schematically, as shown in FIG. 14, in the landscape display state, a user usually hold a terminal with two hands, therefore a first area 1401 and a second area 1402 are one-handed operation areas of the user, and a third area 1403 is an operation dead zone of the user; the closer shorter edge areas of the screen, the more convenient for the user to operate with a single hand. In a current application interface, use frequencies of a shortcut tool control A, a shortcut tool control B, and a shortcut tool control C are sequentially: shortcut tool control B> shortcut tool control C> shortcut tool control A, and thus a display position of the shortcut tool control B is an area that is the most convenient for one-handed operations, and is displayed in first-level tool menus in prior, such that the shortcut tool control B can still be clicked when a first-level tool menu is called out; the shortcut tool control C is the next, and the shortcut tool control A is the last.

In this embodiment, by determining display positions of various shortcut tool controls in a side toolbar according to a current application and a use frequency of each shortcut tool control in the current application, shortcut tool controls with higher use frequencies are enabled to be located in area ranges being more convenient for users to operate with a single hand and be displayed in first-level tool menus in prior, thereby improving tool use efficiency of users in different applications.

Referring to FIG. 15, which shows a structural block diagram of a side-toolbar-display device provided by an exemplary embodiment of the present application. This device can be implemented to be the whole or a part of a terminal by software, hardware, or combination of the two. The device includes: a first display module 1501 configured to display a user interface in an immersive display mode; a first receiving module 1502 configured to receive a first sliding signal and a second sliding signal triggered on a touch display screen, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area; and a second display module 1503 configured to display a side toolbar on an upper layer of the user interface according to the first sliding signal and the second sliding signal, wherein at least one shortcut tool control is displayed in the side toolbar.

Optionally, the second display module 1503 includes: an acquiring unit configured to acquire a current display state, wherein the current display state includes a landscape display state and a portrait display state; a first determining unit configured to: if the first screen-corner area and the second screen-corner area meet a side-toolbar-display condition corresponding to the current display state, determine a target display area of the side toolbar according to the first sliding signal and the second sliding signal; and a first display unit configured to display the side toolbar on the upper layer of the user interface according to the target display area.

Optionally, the first determining unit is configured to: if the current display state is a landscape display state, and the first screen-corner area and the second screen-corner area are corner areas corresponding to the same longer side of a screen, determine that the first screen-corner area and the second screen-corner area meet the side-toolbar-display condition corresponding to the current display state; and if the current display state is a portrait display state, and the first screen-corner area and the second screen-corner area are corner areas corresponding to the same shorter side of a screen, determine that the first screen-corner area and the second screen-corner area meet the side-toolbar-display condition corresponding to the current display state.

Optionally, the first determining unit is further configured to: determine a target screen edge corresponding to the first screen-corner area and the second screen-corner area; and determine a display area at a side of the target screen edge as a target display area.

Optionally, the side toolbar further includes terminal status information; in the landscape display state, the side toolbar includes a first display area, a second display area, and a third display area, the first display area and the third display area are configured to display shortcut tool controls, the second display area is configured to display the terminal status information, and the second display area is located between the first display area and the third display area; and in the portrait display state, the side toolbar includes a fourth display area and a fifth display area, the fourth display area is configured to display shortcut tool controls, and the fifth display area is configured to display the terminal status information.

Optionally, the side tool bar displays a first-level tool menu; and the device further includes: a second receiving module configured to receive a third sliding signal for the side toolbar; and a third display module configured to display a second-level tool menu in the side toolbar according to the third sliding signal, wherein a quantity of shortcut tool controls included in the second-level tool menu is larger than a quantity of shortcut tool controls included in the first-level tool menu.

Optionally, the device further includes: a third receiving module configured to receive an editing operation for a shortcut tool control in the side toolbar; a control module configured to enter an editing mode according to the editing operation, wherein in the editing mode, the side toolbar displays an editing menu, and the editing menu includes at least one candidate shortcut tool control; and an editing module configured to: when receiving a dragging operation for the candidate shortcut tool control, exchange positions of the candidate shortcut tool control and a target shortcut tool control according to the dragging operation, wherein the target shortcut tool control is a shortcut tool control corresponding to a dragging terminal point of the dragging operation.

Optionally, the device further includes: an acquiring module configured to acquire a use frequency of each shortcut tool control in the side toolbar when running different applications; and a determining module configured to determine a display position of each shortcut tool control in the side toolbar according to a current application and a use frequency of each shortcut tool control in the current application, wherein convenience of one-handed operation of the display position is positively correlated with the use frequency.

In conclusion, in this embodiment of the present application, when the terminal displays a user interface in an immersive display mode, a first sliding signal and a second sliding signal triggered on a touch display screen are received, and the first sliding signal and the second sliding signal point toward a screen-middle area from different screen-corner areas, a side toolbar is displayed on an upper layer of the user interface according to the first sliding signal and the second sliding signal. The side toolbar is called out for display by the first sliding signal and the second sliding signal, this can differ from other callout modes of function bars, such as a sliding-downward calling out method for a status bar, thereby reducing probability of misoperation and further improving accuracy of touch control operation.

Referring to FIG. 16, which shows a structural block diagram of a terminal 1600 provided by an exemplary embodiment of the present application. The terminal 1600 may be an electronic device in which applications are installed and running, such as a smart phone, a tablet computer, an e-book, a portable personal computer, and the like. The terminal 1600 in this application may include one or more of the following components: a processor 1602, a memory 1601, and a touch display screen 1603.

The processor 1602 may include one or more processing cores. The processor 1602 uses various interfaces and lines to connect various parts of the entire terminal 1600, and executes various functions of the terminal 1600 and processes data by running or executing instructions, programs, code sets, or instruction sets stored in the memory 1601, and calling data stored in the memory 1601. Optionally, the processor 1602 may adopt at least one kind of hardware forms of digital signal processing (DSP), field-programmable gate array (FPGA), and programmable logic array (PLA) to implement. The processor 1602 may be integrated with one or a combination of a central processing unit (CPU), a graphics processing unit (GPU), a modem, and the like. Among them, the CPU mainly processes an operating system, user interfaces, and application programs; the GPU is used for rendering and drawing of content required being displayed by the touch display screen 1603; and the modem is used for processing wireless communication. It can be understood that the above-mentioned modem may also not be integrated into the processor 1602, but be implemented by a single communication chip alone.

The memory 1601 may include a random access memory (RAM), and may also include a read-only memory (ROM). Optionally, the memory 1601 includes a non-transitory computer-readable storage medium. The memory 1601 may be used to store instructions, programs, codes, code sets or instruction sets. The memory 1601 may include a program storage area and a data storage area, wherein the program storage area may store instructions for implementing an operating system, instructions for implementing at least one function (such as a touch function, a sound playback function, an image playback function, etc.), and instructions for implementing the following various method embodiments, etc. The operating system can be Android systems (including systems further developed based on Android systems), IOS systems developed by Apple (including systems further developed based on IOS systems), or other systems. The storage data area can also store data created by the terminal 1600 during use (such as a phone book, audio and video data, chat record data), and the like.

The touch display screen 1603 is used to receive touch operations of users using any suitable object such as a finger, a touch pen, and the like on it or near it, and to display user interfaces of various application programs. The touch display screen is usually arranged on a front panel of the terminal 1600. The touch display screen can be designed as a full screen, curved screen or special-shaped screen. The touch display screen can also be designed as a combination of a full screen and a curved screen, or a combination of a special-shaped screen and a curved screen, which is not limited in embodiments of the present application.

In addition, those skilled in the art can understand that the structure of the terminal 1600 shown in the above drawings does not constitute any limitation to the terminal 1600, and the terminal may include more or less components than those shown in the drawings, or a combination of certain components, or different component arrangements. For example, the terminal 1600 also includes components such as a radio frequency circuit, a photographing assembly, a sensor, an audio circuit, a wireless fidelity (WiFi) assembly, a power supply, a Bluetooth assembly, etc., which will not be repeated here.

An embodiment of the present application further provides a computer-readable storage medium, the computer-readable storage medium stores at least one instruction, and the at least one instruction is loaded and executed by the processor to implement the side-toolbar-display method according to the above embodiments.

An embodiment of the present application further provides a computer program product, the computer program product stores at least one instruction, and the at least one instruction is loaded and executed by the processor to implement the side-toolbar-display method according to the above embodiments.

Those skilled in the art should be aware that, in one or more of the foregoing examples, the functions described in the embodiments of the present application may be implemented by hardware, software, firmware, or any combination thereof. When being implemented by software, these functions can be stored in a computer-readable medium or transmitted as one or more instructions or codes on the computer-readable medium. The computer-readable medium includes a computer storage medium and a communication medium, wherein the communication medium includes any medium that is convenient to transfer a computer program from one place to another. The storage medium may be any available medium that can be accessed by a general-purpose or special-purpose computer.

The above are only optional embodiments of the present application and are not intended to limit the present application. Any modification, equivalent replacement, improvement, etc. made within spirit and principle of the present application shall be included in the protection scope of the present application.

## Claims

1. A side-toolbar-display method, comprising:
displaying a user interface in an immersive display mode;
receiving a first sliding signal and a second sliding signal triggered on a touch display screen, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area; and
displaying a side toolbar on an upper layer of the user interface according to the first sliding signal and the second sliding signal, wherein at least one shortcut tool control is displayed in the side toolbar.

2. The method according to claim 1, wherein the displaying a side toolbar on an upper layer of the user interface according to the first sliding signal and the second sliding signal comprises:
acquiring a current display state, wherein the current display state includes a landscape display state and a portrait display state;
if the first screen-corner area and the second screen-corner area meet a side-toolbar-display condition corresponding to the current display state, determining a target display area of the side toolbar according to the first sliding signal and the second sliding signal; and
displaying the side toolbar on the upper layer of the user interface according to the target display area.

3. The method according to claim 2, after the acquiring a current display state, further comprising:
if the current display state is a landscape display state, and the first screen-corner area and the second screen-corner area are corner areas corresponding to the same longer side of a screen, determining that the first screen-corner area and the second screen-corner area meet the side-toolbar-display condition corresponding to the current display state; and
if the current display state is a portrait display state, and the first screen-corner area and the second screen-corner area are corner areas corresponding to the same shorter side of a screen, determining that the first screen-corner area and the second screen-corner area meet the side-toolbar-display condition corresponding to the current display state.

4. The method according to claim 3, wherein the determining a target display area of the side toolbar according to the first sliding signal and the second sliding signal comprises:
determining a target screen edge corresponding to the first screen-corner area and the second screen-corner area; and
determining a display area at a side of the target screen edge as a target display area.

5. The method according to any one of claims 1-4, wherein the side toolbar further comprises terminal status information;
in the landscape display state, the side toolbar comprises a first display area, a second display area, and a third display area, the first display area and the third display area are configured to display shortcut tool controls, the second display area is configured to display the terminal status information, and the second display area is located between the first display area and the third display area; and
in the portrait display state, the side toolbar comprises a fourth display area and a fifth display area, the fourth display area is configured to display shortcut tool controls, and the fifth display area is configured to display the terminal status information.

6. The method according to any one of claims 1-4, wherein the side tool bar displays a first-level tool menu;
and after the displaying a side toolbar on an upper layer of the user interface according to the first sliding signal and the second sliding signal, the method further comprises:
receiving a third sliding signal for the side toolbar; and
displaying a second-level tool menu in the side toolbar according to the third sliding signal, wherein a quantity of shortcut tool controls included in the second-level tool menu is larger than a quantity of shortcut tool controls included in the first-level tool menu.

7. The method according to any one of claims 1-4, after the displaying a side toolbar on an upper layer of the user interface according to the first sliding signal and the second sliding signal, further comprising:
receiving an editing operation for a shortcut tool control in the side toolbar;
entering an editing mode according to the editing operation, wherein in the editing mode, the side toolbar displays an editing menu, and the editing menu includes at least one candidate shortcut tool control; and
when receiving a dragging operation for the candidate shortcut tool control, exchanging positions of the candidate shortcut tool control and a target shortcut tool control according to the dragging operation, wherein the target shortcut tool control is a shortcut tool control corresponding to a dragging terminal point of the dragging operation.

8. The method according to any one of claims 1-4, further comprising:
acquiring a use frequency of each shortcut tool control in the side toolbar when running different applications; and
determining a display position of each shortcut tool control in the side toolbar according to a current application and a use frequency of each shortcut tool control in the current application, wherein convenience of one-handed operation of the display position is positively correlated with the use frequency.

9. A side-toolbar-display device, comprising:
a first display module configured to display a user interface in an immersive display mode;
a first receiving module configured to receive a first sliding signal and a second sliding signal triggered on a touch display screen, wherein sliding directions of the first sliding signal and the second sliding signal point from screen-corner areas to a screen-middle area, a sliding starting point of the first sliding signal is located in a first screen-corner area, the second sliding signal is located in a second screen-corner area, and the first screen-corner area is different from the second screen-corner area; and
a second display module configured to display a side toolbar on an upper layer of the user interface according to the first sliding signal and the second sliding signal, wherein at least one shortcut tool control is displayed in the side toolbar.

10. The device according to claim 9, wherein the second display module comprises:
an acquiring unit configured to acquire a current display state, wherein the current display state includes a landscape display state and a portrait display state;
a first determining unit configured to: if the first screen-corner area and the second screen-corner area meet a side-toolbar-display condition corresponding to the current display state, determine a target display area of the side toolbar according to the first sliding signal and the second sliding signal; and
a first display unit configured to display the side toolbar on the upper layer of the user interface according to the target display area.

11. The device according to claim 10, wherein the first determining unit is configured to:
if the current display state is a landscape display state, and the first screen-corner area and the second screen-corner area are corner areas corresponding to the same longer side of a screen, determine that the first screen-corner area and the second screen-corner area meet the side-toolbar-display condition corresponding to the current display state; and
if the current display state is a portrait display state, and the first screen-corner area and the second screen-corner area are corner areas corresponding to the same shorter side of a screen, determine that the first screen-corner area and the second screen-corner area meet the side-toolbar-display condition corresponding to the current display state.

12. The device according to claim 11, wherein the first determining unit is further configured to:
determine a target screen edge corresponding to the first screen-corner area and the second screen-corner area; and
determine a display area at a side of the target screen edge as a target display area.

13. The device according to any one of claims 9-12, wherein the side toolbar further includes terminal status information;
in the landscape display state, the side toolbar comprises a first display area, a second display area, and a third display area, the first display area and the third display area are configured to display shortcut tool controls, the second display area is configured to display the terminal status information, and the second display area is located between the first display area and the third display area; and
in the portrait display state, the side toolbar comprises a fourth display area and a fifth display area, the fourth display area is configured to display shortcut tool controls, and the fifth display area is configured to display the terminal status information.

14. The device according to any one of claims 9-12, wherein the side tool bar displays a first-level tool menu; and
the device further comprises:
a second receiving module configured to receive a third sliding signal for the side toolbar; and
a third display module configured to display a second-level tool menu in the side toolbar according to the third sliding signal, wherein a quantity of shortcut tool controls included in the second-level tool menu is larger than a quantity of shortcut tool controls included in the first-level tool menu.

15. The device according to any one of claims 9-12, wherein the device further includes:
a third receiving module configured to receive an editing operation for a shortcut tool control in the side toolbar;
a control module configured to enter an editing mode according to the editing operation, wherein in the editing mode, the side toolbar displays an editing menu, and the editing menu includes at least one candidate shortcut tool control; and
an editing module configured to: when receiving a dragging operation for the candidate shortcut tool control, exchange positions of the candidate shortcut tool control and a target shortcut tool control according to the dragging operation, wherein the target shortcut tool control is a shortcut tool control corresponding to a dragging terminal point of the dragging operation.

16. The device according to any one of claims 9-12, wherein the device further includes:
an acquiring module configured to acquire a use frequency of each shortcut tool control in the side toolbar when running different applications; and
a determining module configured to determine a display position of each shortcut tool control in the side toolbar according to a current application and a use frequency of each shortcut tool control in the current application, wherein convenience of one-handed operation of the display position is positively correlated with the use frequency.

17. A terminal, comprising a processor and a memory; wherein the memory stores at least one instruction, and the at least one instruction is configured to be executed by the processor to implement the side-toolbar-display method according to any one of claims 1-8.

18. A computer-readable storage medium storing at least one instruction, wherein the at least one instruction is configured to be executed by a processor to implement the side-toolbar-display method according to any one of claims 1-8.
